**Europäisches Patentamt**

**European Patent Office**

**Office européen des brevets**

(19)

(11) Veröffentlichungsnummer : **0 334 409 B1**

(12)                    **EUROPÄISCHE PATENTSCHRIFT**

(45) Veröffentlichungstag der Patentschrift :
23.12.92 Patentblatt 92/52

(51) Int. Cl.⁵ : **C04B 18/10, C04B 28/04**

(21) Anmeldenummer : **89200442.5**

(22) Anmeldetag : **22.02.89**

(54) **Verfahren zum Erzeugen von Flugasche enthaltenden Formkörpern.**

(30) Priorität : **24.03.88 DE 3809938**

(43) Veröffentlichungstag der Anmeldung :
27.09.89 Patentblatt 89/39

(45) Bekanntmachung des Hinweises auf die
Patenterteilung :
23.12.92 Patentblatt 92/52

(84) Benannte Vertragsstaaten :
**CH DE GB IT LI NL**

(56) Entgegenhaltungen :
**DE-A- 3 441 244**
**NL-A- 8 202 014**

(56) Entgegenhaltungen :
**TONINDUSTRIE-ZEITUNG, Band 104, Nr. 4,
1980, Seiten 233-234, Sprechsaal Verlag, Coburg, DE; G.A. HABEL: "Verfahren zurHerstellung eines Zuschlagstoffes für Baumaterialien
aus Abfallschlacke und Filterasche aus Müllverbrennungsanlagen"**
**CHEMICAL ABSTRACTS, Band 99, Nr. 22, 28.
November 1983, Seite 298, Nr. 180662t, Columbus, Ohio, US.**

(73) Patentinhaber : **METALLGESELLSCHAFT AG**
**Reuterweg 14 Postfach 3724**
**W-6000 Frankfurt/M.1 (DE)**

(72) Erfinder : **Sander, Ludwig**
**Rodgau Strasse 38**
**W-6057 Dietzenbach (DE)**
Erfinder : **Thümmel, Bernt**
**Zeilshainer Strasse 44a**
**W-6238 Hofheim (DE)**
Erfinder : **Birrer, Josef**
**Weidenweg 36**
**CH-4608 Thun (CH)**
Erfinder : **Beyeler, Peter**
**Hondrichstrasse 54**
**CH-3700 Spiez (CH)**

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

**Beschreibung**

Die Erfindung betrifft ein Verfahren zum Erzeugen von Formkörpern durch Verpressen eines wasserhaltigen Gemisches, das Flugasche und Zement enthält.

In der DE-OS 36 21 824 wird ein solches Verfahren beschrieben, wobei das zu verpressende Gemisch als Hauptbestandteil Gips aus der Rauchgas-Entschwefelung enthält. Die Formkörper des bekannten Verfahrens werden zu Splitt zerkleinert und dieser Splitt wird dann als Betonzuschlag verwendet. Aus JP-A-58 027 221 und DE-A-3 441 244 ist die Verfestigung einer Mischung bekannt, die hauptsächlich aus zerkleinerter Müllverbrennungsschlacke und Zement besteht. Die aus JP-A bekannte Mischung kann kleine Mengen an Flugasche enthalten.

Der Erfindung liegt die Aufgabe zugrunde, stabile Formkörper herzustellen, die selbständig und ohne Behälter deponiert werden können. Erfindungsgemäß gelingt dies beim eingangs genannten Verfahren dadurch, daß die Flugasche aus der Reinigung eines Rauchgases aus der Abfallverbrennung stammt, daß die Trockensubstanz des Gemisches zu 30 bis 70 Gew.-% aus Flugasche und zu 20 bis 50 Gew.-% aus Zement besteht und daß das Gemisch das 0,5- bis 1,5-fache des Gewichts des Zements an Wasser enthält. Die Verwendung von Gips entfällt bei der Herstellung des Gemisches ganz oder weitgehend.

Zweckmäßigerweise enthält die Trockensubstanz des Gemisches 20 bis 40 Gew.-% gewaschene Flugasche und 10 bis 50 Gew.-% ungewaschene Flugasche. Beim Waschen werden aus der Flugasche wasserlösliche Stoffe, insbesondere Chloride, entfernt. Durch das Mitverwenden der gewaschenen Flugasche wird mindestens ein Teil des für die Verfestigung des Gemisches nötigen Wassers in das Gemisch eingebracht.

Die Trockensubstanz des Gemisches kann auch 5 bis 30 Gew.-% Filterkuchen aus der Entwässerung eines Schlammes enthalten, der aus einer Naßwäsche des Rauchgases der Abfallverbrennung stammt. Durch diesen Filterkuchen bringt man Wasser in erwünschter Weise in das Gemisch ein.

Es ist ferner möglich, Schlacke aus der Abfallverbrennung dem zu verpressenden Gemisch beizugeben. Zweckmäßigerweise enthält die Trockensubstanz des Gemisches dann 5 bis 30 Gew.-% Schlacke.

Durch das Verfahren gelingt es, Schwermetalle enthaltende Rückstände aus der Abfallverbrennung in einem stabilen Formkörper zu immobilisieren. Diese Formkörper brauchen dann nicht mehr auf Sonderdeponien gelagert zu werden, weil die Formkörper die Schwermetalle auf Dauer einschließen und auch keine unzulässige Auswaschung durch Regen zu befürchten ist. Das Verfahren eignet sich deshalb besonders auch zum Entsorgen der Rückstände der Müllverbrennung, insbesondere der Verbrennung von kommunalem Müll.

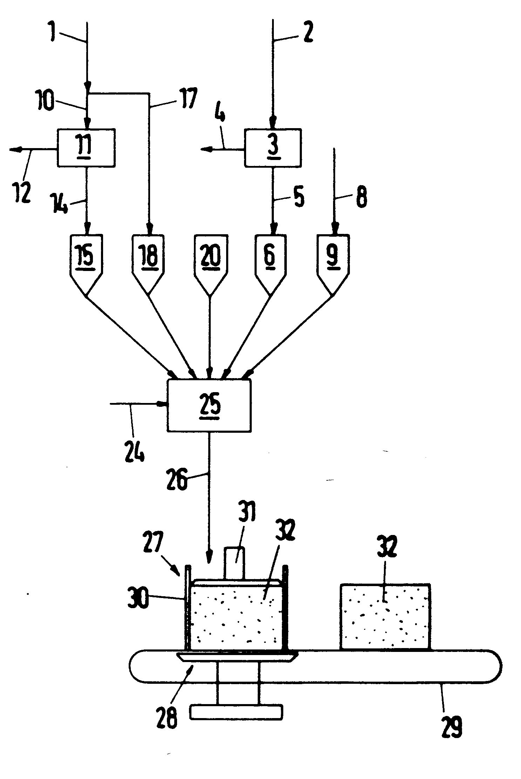

Ausgestaltungsmöglichkeiten des Verfahrens werden mit Hilfe der Zeichnung erläutert.

Eine nicht dargestellte Abfallverbrennungsanlage, z.B. eine kommunale Müllverbrennung, enthält eine ebenfalls nicht gezeigte Reinigung des Rauchgases. Bei der trockenen Entstaubung des Rauchgases, z.B. durch Zyklone, Filter und auch Elektrofilter, fällt trockene Flugasche an, die in der Leitung (1) herangeführt wird. Das Rauchgas wird dann einer an sich bekannten Naßwäsche unterworfen, die ebenfalls nicht dargestellt ist. Der dabei anfallende, ggf. voreingedickte Schlamm wird in der Leitung (2) zu einer Filtereinrichtung (3) geführt, aus der man Filtrat durch die Leitung (4) entfernt und den Filterkuchen durch die Leitung (5) zu einem Behälter (6) führt. Der Filterkuchen hat üblicherweise Wassergehalte im Bereich von 40 bis 60 Gew.-%. Die Schlacke aus der Abfallverbrennung kann man durch die Leitung (8) in einen weiteren Behälter (9) geben.

Ein Teil der Flugasche aus der Leitung (1) wird durch die Leitung (10) einer Wäsche oder Laugung (11) aufgegeben, wo wasserlösliche Substanzen herausgelöst werden. Das z.B. Chloride enthaltende Abwasser zieht man in der Leitung (12) ab. Gewaschene Flugasche mit einem Wassergehalt von üblicherweise 40 bis 55 Gew.-% gelangt in der Leitung (14) zu einem Behälter (15).

Ein Teil der Flugasche aus der Leitung (1) wird ungewaschen durch die Leitung (17) zu einem weiteren Behälter (18) geführt. Zement, z.B. Portland-Zement, wird im Vorratsbehälter (20) bereitgehalten.

Aus den Behältern (15), (18), (20), (6) und (9) gibt man die verschiedenen Substanzen in dosierter Menge in einen Mischer (25). Falls die Komponenten der Mischung nicht genügend Wasser enthalten, wird das noch nötige Wasser durch die Leitung (24) zugegeben. Das Gemisch gelangt dann durch die Leitung (26) zu einer Form- und Preßeinrichtung (27), die nur schematisch dargestellt ist. In der Zeichnung sind ein Tisch (28), ein Förderband (29), ein vertikal verschiebbarer Formzylinder (30) und ein Preßstempel (31) zu sehen. Das zu verpressende Gemisch wird in den Formzylinder (30) auf das vom Tisch (28) unterstützte Förderband (29) gefüllt und durch den Stempel (31) verpreßt. Der Preßdruck kann hydraulisch oder auch mechanisch aufgebracht werden, da zum Verfestigen der Mischung ein relativ niedriger Druck von 1 bis 20 N/mm² und vorzugsweise 5 bis 10 N/mm² üblicherweise ausreicht. Die Preßzeit liegt im Bereich von 5 bis 180 s und vorzugsweise 10 bis 60 s. Danach ist der Formkörper (32) verfestigt und kann nach Abziehen des Stempels (31) und des Zylinders (30) abtransportiert werden.

Es ist vorteilhaft, stapelbare Formkörper (32) herzustellen, z.B. Quader, Zylinder oder Würfel. Für die Formkörper empfehlen sich Volumina im Bereich von 0,1 bis 2 m³ und vorzugsweise 0,3 bis 0,7 m³. Diese Formkörper sind bereits ausreichend verfestigt und können ohne weitere Behandlung auf eine Deponie verbracht und dort auch im Freien gestapelt werden. Da gefährliche Stoffe, insbesondere Schwermetalle, im Formkörper immobilisiert sind, brauchen die Formkörper nicht wie Sondermüll behandelt zu werden.

Beispiele

In einer kommunalen Müllverbrennungsanlage mit Rauchgasreinigung fallen ungewaschene Flugasche, gewaschene Flugasche mit einem Wassergehalt von 50 Gew.-% und schwermetallreicher Filterkuchen mit einem Wassergehalt von ebenfalls 50 Gew.-% an. Es werden ein Gemisch (I) und ein Gemisch (II) hergestellt, deren Zusammensetzungen in Gew.-%, gerechnet als Trockensubstanz, nachfolgend angegeben ist:

|  | I | II |
|---|---|---|
| Gewaschene Flugasche | 27 | 36 |
| Ungewaschene Flugasche | 36 | 15 |
| Filterkuchen | 7 | 9 |
| Zement | 30 | 40 |

Beide Gemische werden zu Würfeln von 1 m Kantenlänge verpreßt, der Preßdruck liegt bei etwa 6 N/mm², die Preßzeit beträgt 20 s. Die Formkörper sind nach der Preßzeit formstabil und so fest, daß sie wegtransportiert werden können.

**Patentansprüche**

1. Verfahren zum Erzeugen von Formkörpern durch Verpressen eines wasserhaltigen Gemisches, das Flugasche und Zement enthält, dadurch gekennzeichnet, daß die Flugasche aus der Reinigung eines Rauchgases aus der Abfallverbrennung stammt, daß die Trockensubstanz des Gemisches zu 30 bis 70 Gew.-% aus Flugasche und zu 20 bis 50 Gew.-% aus Zement besteht und daß das Gemisch das 0,5- bis 1,5-fache des Gewichts des Zements an Wasser enthält.

2. Verfahren nach Anspruch 1, dadurch gekennzeichnet, daß die Trockensubstanz des Gemisches 20 bis 40 Gew.-% gewaschene Flugasche und 10 bis 50 Gew.-% ungewaschene Flugasche enthält.

3. Verfahren nach Anspruch 1 oder 2, dadurch gekennzeichnet, daß die Trockensubstanz des Gemisches 5 bis 30 Gew.-% Filterkuchen aus der Entwässerung eines Schlammes enthält, der aus einer Naßwäsche des Rauchgases der Abfallverbrennung stammt.

4. Verfahren nach Anspruch 1 oder einem der folgenden, dadurch gekennzeichnet, daß die Trockensubstanz des Gemisches 5 bis 30 Gew.-% Schlacke aus der Abfallverbrennung enthält.

5. Verfahren nach Anspruch 1 oder einem der folgenden, dadurch gekennzeichnet, daß es sich bei der Abfallverbrennung um die Verbrennung von Müll, insbesondere kommunalen Müll, handelt.

6. Verfahren nach Anspruch 1 oder einem der folgenden, dadurch gekennzeichnet, daß das Gemisch zu stapelbaren Formkörpern verpreßt wird.

**Claims**

1. A method for producing shaped bodies by compressing a water-containing mixture which contains fly ash and cement, characterised in that the fly ash comes from the purification of a flue gas from the combustion of waste, that the dry substance of the mixture consists of 30 to 70% by weight fly ash and 20 to 50% by weight cement and that the mixture contains 0.5 to 1.5 times the weight of the cement in water.

2. A method according to Claim 1, characterised in that the dry substance of the mixture contains 20 to 40% by weight washed fly ash and 10 to 50% by weight unwashed fly ash.

3. A method according to Claim 1 or 2, characterised in that the dry substance of the mixture contains 5 to 30% by weight filter cake from the dewatering of a sludge which comes from wet scrubbing of the flue gas from the combustion of waste.

4. A method according to Claim 1 or one of the following Claims, characterised in that the dry substance of the mixture contains 5 to 30% by weight slag from the combustion of waste.

5. A method according to Claim 1 or one of the following Claims, characterised in that the combustion of waste is the combustion of refuse, in particular domestic refuse.

6. A method according to Claim 1 or one of the following Claims, characterised in that the mixture is pressed into stackable shaped bodies.

## Revendications

1. Procédé de production de corps conformés par compression d'un mélange aqueux qui contient des cendres volantes et du ciment, caractérisé en ce que les cendres volantes proviennent de l'épuration d'un gaz de fumée de l'incinération de déchets, la matière sèche du mélange est constituée, pour 30 à 70 % en poids, de cendres volantes et, pour 20 à 50 % en poids, de ciment, et le mélange contient en eau de 0,5 à 1,5 fois le poids du ciment.

2. Procédé suivant la revendication 1, caractérisé en ce que la substance sèche du mélange contient de 20 à 40 % en poids de cendres volantes lavées et de 10 à 50 % en poids de cendres volantes non lavées.

3. Procédé suivant la revendication 1 ou 2, caractérisé en ce que la matière sèche du mélange contient de 5 à 30 % en poids de gâteau de filtre provenant de la déshydratation d'une boue, qui provient d'un lavage humide du gaz de fumée de l'incinération de déchets.

4. Procédé suivant la revendication 1 ou l'une des suivantes, caractérisé en ce que la substance sèche du mélange contient de 5 à 30 % en poids de scories provenant de l'incinération de déchets.

5. Procédé suivant la revendication 1 ou l'une des suivantes, caractérisé en ce que l'incinération des déchets est l'incinération d'ordures, notamment d'ordures ménagères.

6. Procédé suivant la revendication 1 ou l'une des suivantes, caractérisé en ce que le mélange est comprimé en corps conformés susceptibles d'être empilés.